# EUROPEAN PATENT SPECIFICATION

(11) **EP 4 131 161 B1**
(45) Date of publication and mention of the grant of the patent: **04.03.2026**
(21) Application number: 22187356.5
(22) Date of filing: 28.07.2022
(51) Int. Cl.: G06T 7/00, G06T 7/73

(54) **A METHOD FOR DETERMINING DEVIATION IN ALIGNMENT OF A CAMERA IN A VEHICLE**
VERFAHREN ZUR BESTIMMUNG DER ABWEICHUNG DER AUSRICHTUNG EINER KAMERA IN EINEM FAHRZEUG
PROCÉDÉ DE DÉTERMINATION D'UN ÉCART D'ALIGNEMENT D'UNE CAMÉRA DANS UN VÉHICULE

(30) Priority: 05.08.2021 GB 202111293
(43) Date of publication of application: 08.02.2023
(73) Proprietor: AUMOVIO Autonomous Mobility Germany GmbH, 85057 Ingolstadt (DE)
(72) Inventor: Rao, Bellary Madhusudan, 339780 Singapore (SG); Unikkadan, Shahanas, 339780 Singapore (SG); Mishra, Eitishree, 339780 Singapore (SG); Kakade, Poonam, 339780 Singapore (SG); Govindashetty, Ravi, 339780 Singapore (SG); Singampalle, Kumar Parichay, 339780 Singapore (SG)
(74) Representative: Aumovio Corporation

(56) References cited:
- EP-B1- 2 955 915
- WO-A1-2021/043393
- US-A1- 2016 234 436

## Description

### TECHNICAL FIELD

Present invention relates in general to a field of automobiles. Particularly, although not exclusively, the present invention relates to a pre-condition check for running a calibration algorithm for a camera in a vehicle. Further embodiments of the present disclosure disclose a method and a system for determining and confirming correct position of the cameras mounted in the vehicle.

### BACKGROUND

Image capturing units such as camera is used in a number of applications. One such application is in automotive industry. It is a recent trend to mount one or more cameras on the vehicle to help owner/user of the vehicle in various aspects of security, maneuverability, and autonomous driving capability of the vehicle. In some instances, the cameras may also be helpful for the vehicle owner to monitor the actions of their drivers or to monitor the activity around their vehicle while it is parked on the street. It helps vehicle owners to monitor the things that happen in and around their vehicle, capture footage and, in some cases, monitor the whereabouts of the vehicle itself, depending on the features of the chosen camera equipped in the vehicle. Cameras may be mounted in multiple slots/mounts defined at multiple locations of the vehicle. Some cameras provide blind spot assistance, and some helps giving a better view when the vehicle is back into parking spaces. The cameras installed throughout the vehicle serve a primary purpose of providing the driver with an enhanced view of the vehicle's exterior. There may be front-facing cameras, mirror mounted cameras, rearview cameras, which detect the proximity of objects to the vehicle.

Generally, placement of the camera defines the position and alignment of a camera within an environment. Conventionally, magnetic and/or optical trackers are used for determining the position of the cameras which is often time consuming and expensive. Once, the camera is precisely aligned in the slots defined in the vehicle, the camera may be calibrated. Calibration of the camera in the vehicle involves configuring a software in the vehicle to accurately realize and identify the position of the camera within the vehicle. Based on the computer aided designs [CAD designs] of the vehicle, pre-determined positions where the cameras to be mounted are already known. The accurate position of the camera aligned in the vehicle may be realized by the software by running the calibration algorithm. For the software to accurately detect the proximity of an object using the inputs from the camera, the accurate position of the camera with a tolerance as low as 0.1 degree is required to be known by the software. Hence, running of the calibration algorithm for the software to realize the accurate location of the camera becomes critical. The above process of calibrating the camera is expensive, tedious and time consuming.

Further, if the camera is incorrectly positioned in the slot/mount of the vehicle or if the camera alignment inside the slot/mount of the vehicle is faulty, the process of running the calibration algorithm is rendered useless. Enabling the software to accurately realize an incorrectly aligned camera inside the slot of the vehicle by running the calibration algorithm is futile as the inputs or the data received from the incorrectly aligned camera would also be faulty. Consequently, the data projected to owner/user is also incorrect. Therefore, a technician may be forced to re-align the camera in the slot/mount and re-run the calibration algorithm. This process is inefficient and time consuming. The overall operational costs also increase drastically when the calibration algorithm is run pre-maturely before correctly aligning the camera. Also, the existing method to align cameras inside the slots defined in the vehicle have their own limitations.

US 2016/234436 A1 discloses a surround view monitoring system configured to synthesize a birds-eye-view image of an area around a vehicle includes a camera and a controller. The camera is configured to capture a present-image of a field-of-view about the vehicle and output a signal indicative of the present-image. The present-image includes a feature of the vehicle. The controller is configured to receive the signal, compare the present-image to a reference-image from an initial calibration of the system. The reference-image also includes the feature. The controller is further configured to determine a correction table for the present-image to align the feature in the present-image to the feature in the reference-image.

EP 2955915 B1 discloses an around view provision apparatus and a vehicle including the same are disclosed. The around view provision apparatus may include a plurality of cameras provided to capture images of different regions around the vehicle. A memory may be provided to store a reference image for each of the cameras. A processor may calculate offset information for at least one of the plurality of cameras based on a difference between the reference image for the camera stored in the memory and an image captured by the camera. Respective images captured through the plurality of cameras may be combined using the offset information so as to generate an around view image.

WO 2021/043393 A1 discloses a method for calibrating the field of vision of a camera mounted on a vehicle, the camera being intended for capturing an image of a surrounding area of the vehicle. The method comprises: - defining at least one embedded element of the vehicle as a target for calibration; - defining an image including the target in a predetermined location in the image as a reference image for calibration; - the camera being in an initial positioning relative to the vehicle, capturing an image including the target, the target being at a location in the captured image, with the camera; - comparing the captured image with the reference image; - adjusting the camera positioning relative to the vehicle such that the image captured by the camera is identical to the reference image.

There may be a need for improved camera alignment systems and methods, to enhance the accuracy of mounting, aligning of cameras and to reduce the overall operational costs by providing improved feedback to the technician on the alignment of the camera.

The present disclosure has been devised in the light of the above considerations.

### SUMMARY OF THE INVENTION

One or more shortcomings of the conventional system or device are overcome, and additional advantages are provided through the provision of the method as claimed in the present disclosure.

Additional features and advantages are realized through the techniques of the present disclosure. Other embodiments and aspects of the disclosure are described in detail herein and are considered as part of the claimed disclosure.

In one non-limiting embodiment of the disclosure, a method for determining deviation in alignment of a camera in a vehicle is disclosed. The method includes the steps of receiving, by a control unit, images captured from the camera positioned in a slot defined in the vehicle. The received images from the camera are compared by the control unit with one or more reference images corresponding to the camera. The control unit further determines a deviation in a body portion of vehicle visible in the images received from the camera, from the body portion of the vehicle visible in one or more reference image. Based on the comparison, the control unit indicates the deviation in the alignment of the camera.

In an embodiment of the disclosure, the control unit is configured to determine the deviation by determining edges of the body portion of vehicle visible in the images received from the camera. Further the alignment from the determined edges is estimated and the estimated alignment is compared with the alignment of the body portion in the one or more reference images.

In an embodiment of the disclosure, the control unit is configured to determine the deviation by determining number of pixels of the visible body portion in the images received from the camera. The control unit compares the determined number of pixels with number of pixels in the body portion of the one or more reference image.

In an embodiment of the disclosure, the deviation is indicated by at least one of the number of pixels in the body portion of vehicle visible in the images received from the camera and volume occupied by the body portion of vehicle visible in the images received from the camera.

In an embodiment of the disclosure, the deviation is indicated by angle of the alignment of the body portion of vehicle visible in the images received from the camera.

In an embodiment of the disclosure, the one or more reference images are generated based on computer aided modelling of the vehicle.

In an embodiment of the disclosure, the camera is mounted in at least one a rear end, a front end, a left view mirror and a right view mirror of the vehicle.

In another non-limiting embodiment of the disclosure, a system for determining deviation in alignment of a camera in a vehicle is disclosed. The system includes a control unit configured to receive images captured from the camera positioned in a slot defined in the vehicle. The control unit compares the images received from the camera with one or more reference images corresponding to the camera, stored in a memory unit associated with the control unit. Further, deviation in a body portion of vehicle visible in the images received from the camera from the body portion of the vehicle visible in one or more reference image is determined based on the comparison. The control unit indicates the determined deviation in the alignment of the camera based on the determination.

In an embodiment of the disclosure, an indication unit is associated with the control unit and the indication unit is at least one audio indicator, visual indicator, and audio-visual indicator.

In an embodiment of the disclosure, the control unit is configured to indicate deviation with reference to angle of alignment of the body portion of vehicle visible in the images received from the camera through the indication unit.

In an embodiment of the disclosure, the control unit is configured to generate a recommendation indicative of correction of the deviation, based on the determined level of deviation.

In an embodiment of the disclosure, the recommendation indicative of correction of the deviation is at least one of correction in physical alignment of the camera and a calibration of control logic in imaging through the camera.

In an embodiment of the disclosure, the one or more reference images stored in the memory unit are generated based on computer aided modelling of the vehicle.

### BRIEF DESCRIPTION OF THE ACCOMPANYING FIGURES

The novel features and characteristic of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
Fig.1 illustrates a block diagram of a system for aligning the camera in the vehicle, in accordance with an embodiment of the present disclosure.
Fig. 2 shows a detailed block diagram of components of the system for aligning the camera in the vehicle, in accordance with an embodiment of the present disclosure.
Fig.3 is a flowchart of a method of aligning a camera in a vehicle, in accordance with an embodiment of the present disclosure.
Fig.4 is a schematic view of a reference image generated using CAD during development of the vehicle, in accordance with an embodiment of the present disclosure.
Fig.5 to Fig.8 illustrate captured images from the camera in the vehicle, in accordance with an embodiment of the present disclosure.
Fig. 9 illustrates a captured image from the camera in comparison with an image produced using CAD modelling, in accordance with an embodiment of the present disclosure.

The figures depict embodiments of the disclosure for purposes of illustration only. One skilled in the art will readily recognize from the following description that alternative embodiments of the method for determining deviation in alignment of the camera in the vehicle without departing from the principles of the disclosure described herein.

### DETAILED DESCRIPTION

The foregoing has broadly outlined the features and technical advantages of the present disclosure in order, that the description of the disclosure that follows may be better understood. Additional features and advantages of the disclosure will be described hereinafter which form the subject of the disclosure. It should be appreciated by those skilled in the art that the conception and specific embodiment disclosed may be readily utilized as a basis for modifying or designing other system for carrying out the same purposes of the present disclosure. It should also be realized by those skilled in the art that such equivalent constructions do not depart from the spirit and scope of the disclosure. The novel features which are believed to be characteristic of the disclosure, as to its organization, together with further objects and advantages will be better understood from the following description when considered in connection with the accompanying figures. It is to be expressly understood, however, that each of the figures is provided for the purpose of illustration and description only and is not intended as a definition of the limits of the present disclosure.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and altemative forms, specific embodiment thereof has been shown by way of example in the drawings and will be described below. It should be understood, however that it is not intended to limit the disclosure to the particular forms disclosed, but on the contrary, the disclosure is to cover all modifications, equivalents, and altematives falling within the scope of the disclosure.

The terms "comprises", "comprising", or any other variations thereof, are intended to cover a non-exclusive inclusion, such that a system that comprises a list of components does not include only those components but may include other components not expressly listed or inherent to such mechanism. In other words, one or more elements in the system or steps of method proceeded by "comprises... a" does not, without more constraints, preclude the existence of other elements or additional elements in the mechanism.

It is to be noted that a person skilled in the art would be motivated from the present disclosure and modify various features of system or method, without departing from the scope of the disclosure. Therefore, such modifications are considered to be part of the disclosure. Accordingly, the drawings show only those specific details that are pertinent to understand the embodiments of the present disclosure, so as not to obscure the disclosure with details that will be readily apparent to those of ordinary skilled in the art having benefit of the description herein. Also, the method of the present disclosure may be employed in any kind of vehicles including commercial vehicles, passenger vehicles, and the like. However, complete vehicle which is not illustrated in the drawings of the disclosure is for the purpose of simplicity.

As used in the description below the term "aligning", "alignment" and the corresponding grammatical equivalents thereof, refers to adjustment or positioning of camera in a slot defined in the vehicle. The process of aligning the camera in the slot may be at least one of the acts of rotating, aligning angular orientation, orientation along any one of X, Y, and Z planes such that the position of the camera is fixed as per the optimized position. The alignment may be performed by manually adjusting the camera or using an automated technique, and the feedback for correct alignment of the camera may be procured form images captured by the camera.

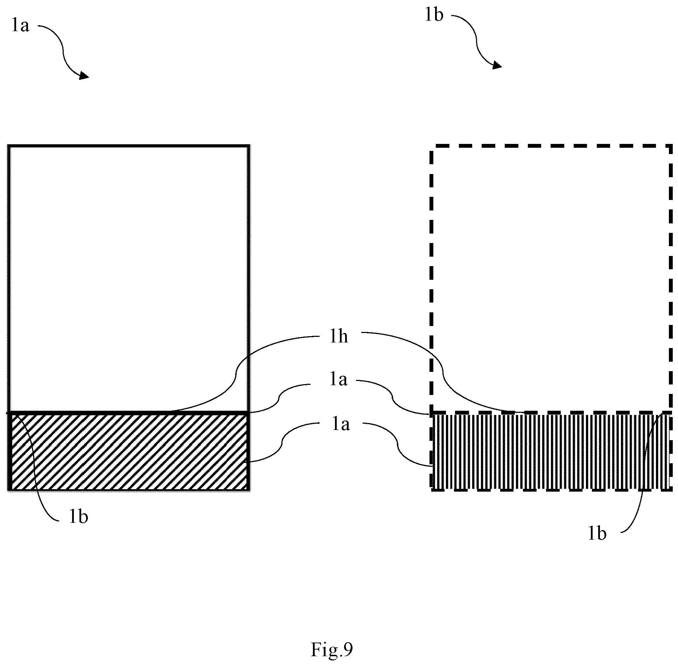

As used in the description below the term "Ideal or perfectly aligned conditions" refers to a condition where the images obtained from the camera mounted in the slot defined in the vehicle are acceptable or correct. An ideal alignment condition for a camera is when the images captured by the camera and displayed by a display unit are in line with or close to the images produced during design stage using CAD. With reference to Fig.9, the image 1a is the image captured from the camera and the image 1b is the image produced using CAD modelling. The ideal alignment condition for the camera may be determined by initially comparing the image 1a with the image 1b. The alignment condition for the captured image 1a is considered to be an ideal alignment when the captured image 1a is similar or inline or close to the image 1b produced during design stage using CAD. The camera mounted in the slot, defined in the vehicle is considered to lie in the ideal or perfectly aligned condition when the angular deviation between the captured image 1a from the camera and the image 1b produced using CAD is not more than 5 degrees in angular deviation.

As used in the description below the term "Indication unit" refers to a hardware component which may provide a visual indication. As an example, the indication unit may be a computer, a laptop, a tablet, a desktop, a device arranged with Light Emitting Diodes (LED) and the like. In another embodiment, the indication unit may provide a sound indication. As an example, the indication unit for the sound indication may be an alarm, a bell, and the like.

As used in the description below the term "control unit" refers to a hardware component such as at least one processor, volatile memory or nonvolatile memory, software comprising instructions executable by a processor, or a combination of software and hardware. The control unit may be adaptive to the vehicle audible device control unit or may be a centralized control unit of the vehicle or may be a dedicated control unit to the system associated with the centralized control unit of the vehicle. Further, the memory unit may be integral part of the control unit or may be communicatively coupled to control unit. The control unit may include specialized processing units such as integrated system (bus) controllers, memory management control units, floating point units, graphics processing units, digital signal processing units, etc. The processing unit may include a microprocessor, such as AMD Athlon, Duron or Opteron, ARM's application, embedded or secure processors, other line of processors, and the like.

As used in the description below the term "reference image or ideal image" refers to the image obtained from computer aided design (CAD). The reference image or ideal image may be obtained from models produced during design stage using CAD. An ideal camera view may be generated from CAD models simulating the camera view from a front view, rear view, left mirror view, right mirror view etc. These images of CAD models may be used as reference image or as an ideal image.

As used in the description below the term "memory unit" refers to a hardware component that may be an integral component of the control unit or a separate component operatively coupled with the control unit. The memory unit may store the reference image or the ideal image which may be procured by the control unit for comparison with a captured image. As an example, the data is stored in the memory associated with the control unit. In some embodiments, the data may include input data, data received from the image capturing unit, data regarding the parameters determined from the control unit and other data.

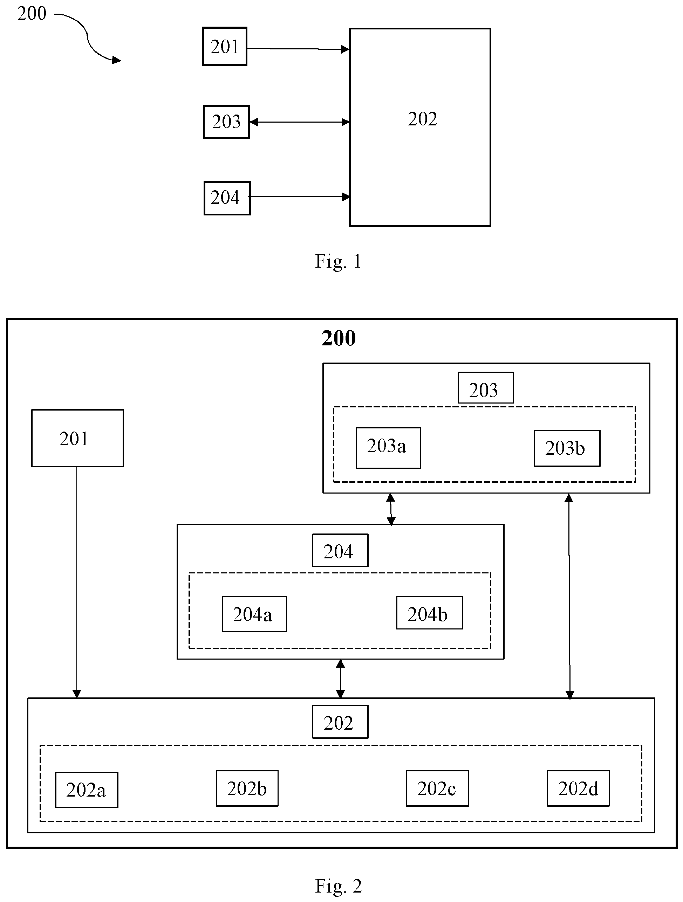

Fig.1 and Fig.2 illustrates a system 200 and a detailed block diagram of components of the system for aligning the camera 201 in the slot defined in the vehicle. The vehicle may include one or more cameras 201 to assist the driver or user in various operations including maneuvering, parking, and the like. More particularly, the vehicle may include a front view camera 201 and a rear-view camera 201 mounted at a front and a rear end of the vehicle, respectively. Also, a left side mirror and a right-side mirror of the vehicle may also include cameras 201. The cameras 201 may be mounted in slots defined at respective locations. The above-mentioned front view camera 201, the rear-view camera 201, left side mirror camera 201 and the right-side camera 201 are only exemplary in nature and the same must not be construed as a limitation in aligning cameras 201 mounted at various other location in the vehicle. The image capturing unit or the camera 201 may be communicatively coupled to a control unit 202 of the system. The images 1 from the image capturing unit may be received by the control unit 202.

Further, the control unit 202 may be coupled to a memory unit 204. The memory unit 204 may include instructions to compare the images received from the image capturing unit with the images produced during design stage using CAD. The memory unit 204 may store images produced during design stage using CAD as reference images 1. In an embodiment, the control unit 202 may include a receiving module 202a, a processing module 202b and a comparison 202c and a display module 204d.

Further, a certain part of the vehicle's body or the body portion 2a is always visible in the images captured 2 from the camera 201. The control unit 202 is configured to determine deviation in the body portion 2a of vehicle visible in the images 2 received from the camera 201, from the body portion 1a of the vehicle visible in one or more reference images 1. The receiving module 202a, receives the images form the camera 201 and the processing module 202b may estimate an alignment 2h of a visible body portion 2a in the images 2 received from the camera 201. The processing module 202b may also determine number of pixels of the visible body portion 2a in the images 2 received from the camera 201. The comparison module 202c may compare the determined alignment 2h of the visible body portion 2a in the images 2 received from the camera 201 with the alignment 1h of the body portion 1a from the reference image 1. The comparison module 202c may also compare the determined number of pixels of the visible body portion 2a in the images 2 received from the camera 201 with the number of pixels of the visible body portion 2a in the reference images 2. Further, based on the output form the comparison module 202c, the display module 202d of the control unit 202 may display the results or deviation in alignment of the body portion 2a by the display unit 203b.

The memory unit 204 may include an input data module 204a and other data module 204b. The input data module 204a may include instructions corresponding to reference images 1. The instructions or the images may be fed into the memory unit 204 by the Input/Output (I/O) interface 203a of the indication unit 203. The control unit 202 may be associated with an Input/Output (I/O) interface 203a and the memory unit 204. In some embodiments, the I/O interface 203a and the memory unit 204 may be present within the control unit 202. The I/O interface 203a may receive input data corresponding CAD images of the vehicle. The other data 204b may be stored data, including temporary data and temporary files, generated by the modules for performing the various functions of the control unit 202.

In an embodiment, CAD models of the vehicle may be used to acquire the reference images 1 from the cameras 201 mounted at different locations in the vehicle. The reference image 1 may be stored in a memory unit 204 and the memory unit 204 may be operatively coupled to the control unit 202. In an embodiment, the alignment 1h of the visible body portion 1a may be along a horizontal axis of the reference image 1.

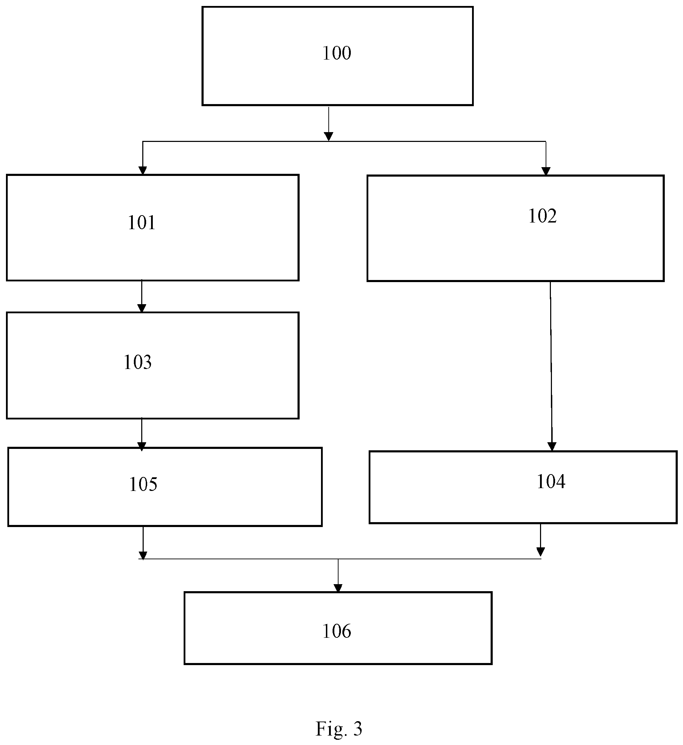

Fig.3 is a flowchart of a method of aligning the camera 201 in the vehicle. The method of determining the deviation in alignment of the camera 201 is explained below. The camera 201 may be operatively coupled to the control unit 202 and the receiving module 202a of the control unit 202a may receive captured images 2 from cameras 201 mounted at different locations of the vehicle at step 100. Further, for every image taken from the camera 201 mounted in the vehicle, there always exists a certain body portion 2a of the vehicle which is always visible in the captured image 2. The processing module 202b in the control unit 202 may determine edges 2b and 2c of the body portion 2a of vehicle visible in the captured images 2 received from the camera 201 at step 101. The processing module 202b may further estimate an alignment 2h from the determined edges 2b and 2c of the captured image 2 at step 103. The estimated alignment 2h in the captured image 2 is further compared with the alignment 1h of the body portion 1a in the one or more reference images 1 by the comparison module 202c at step 105. The control unit 202 may be operatively coupled to the indication unit 203 and the deviation in the alignment 2h of the captured image 2 from the alignment 1h in the reference image 1 may be suitably indicated by the indication unit 203 at step 106. The display module 202d of the control unit 202 may convey the deviation in alignment of the body portion 2a to the display unit 203b of the indication unit 203 and the same may be indicated by display unit 203b. The control unit 202 may also be configured to determine the deviation by determining number of pixels of the visible body portion 2a in the captured images 2 received from the camera at step 102. The number of pixels of the visible body portion 2a in the captured images 2 are compared with the number of pixels in the body portion 1a of the one or more reference image 1 by the comparison module at step 104. The deviation in number of pixels in the visible body portion 2a of the captured images 2 from the number of pixels in the body portion 1a of the one or more reference image 1 is indicative of the deviation in alignment of the camera 201. This deviation determined in the above-mentioned process is suitably indicated by the control unit 202 through the indication unit 203 at step 106. The display module 202d of the control unit 202 may convey the deviation in number of pixels of the body portion 2a to the display unit 203b of the indication unit 203 and the same may be indicated by display unit 203b. The control unit 202 may be configured to generate a recommendation indicative of correction of the deviation, based on the determined level of the deviation. Small deviations can always be compensated by the calibration algorithm. Accordingly, if the determined level of deviation exceeds a certain range, the control unit 202 may indicate through the indication unit 203 that the physical alignment of the camera 201 is required. Further, if the determined level of deviation lies within the pre-determined range, the control unit 202 may indicate that the existing deviation may be compensated by control logic in imaging through the camera 201.

In an embodiment, the indication unit 203 is at least one audio indicator, visual indicator, and audio-visual indicator.

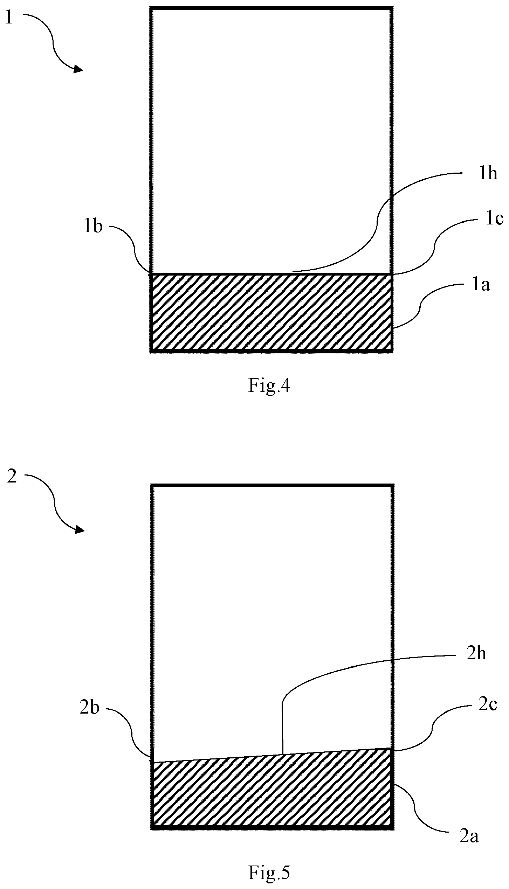

Further, the method of aligning the camera 201 in the vehicle is explained below with reference to the views obtained from the cameras 201 mounted at the front end or the rear end of the vehicle. With further reference to Fig.4, a certain portion of the license plates may always be visible in the images captured from the camera 201 positioned at the front end and the rear end of the vehicle. In some vehicles, a small portion of a bumper or front face may be visible in the captured image. This portion of the vehicle which is always visible in the obtained images is referred to as the body portion 1a. The hatched portion as seen from Fig.4 is the body portion 1a of the vehicle in the reference image 1. The remainder of the reference image 1 may include information about the surroundings including environment, obstacles, or other vehicles etc. The reference image 1 may be configured such that the body portion 1a may occupy approximately 25% to 30% of the total volume in the reference image 1. However, the volume occupied by the body portion 1a may be varied to any suitable values or ranges based on the requirement by the manufacturer during the design stage. The body portion 1a of the vehicle in the reference image 1 may be defined by a first edge 1b and a second edge 1c. The first edge 1b and the second edge 1c of the body portion 1a in the reference image 1 may be identified and a first alignment 1h or a slope between the first edge 1b and the second edge 1c may subsequently be calculated by the processing module 202b. The first edge 1b and the second edge 1c may be identified by sobel edge detection method and the slope or the first alignment 1h between the first edge 1b and the second edge 1c may be determined by Hough line detection. Further, Sobel edge detection may be used in image processing, particularly within edge detection algorithms where it creates an image emphasizing the edges. If two edge points lie on the same line, their corresponding cosine curves will intersect with each other on a specific pair. Hough line detection algorithm detects lines by finding the pairs that has a number of intersections larger than a certain threshold. The detection of the first edge 1b and the second edge 1c and the estimation of the first alignment 1h between the first edge 1b and the second edge 1c may not be limited to the above-mentioned methods and any methods or systems known in the art may be used. The estimated first alignment 1h is indicative of the alignment of the camera 201. The detection of the first edge 1b, the second edge 1c and the estimation of the first alignment 1h between the first edge 1b and the second edge 1c may not be limited to the above-mentioned methods and any methods or systems known in the art may be used. The estimated first alignment 1h is indicative of the alignment of the camera 201. Further, number of pixels in the body portion 1a of the vehicle from the reference image 1 may be determined by histogram or any other method known in the art. The number of pixels detectable in the body portion 1a of the vehicle from the reference image 1 is also indicative of an ideal alignment of the camera 201 and the number of pixels in the body portion 1a of the vehicle from the reference image 1 may also be saved for reference. The reference image 1 may vary for different vehicles and different models. In an embodiment, the reference values of the first alignment 1h and the number of pixels in the body portion 1a may be pre-determined from the reference images 1 generated by the CAD models of the vehicle and the same reference values may be stored in the memory unit 204.

Fig.5 to Fig.8 illustrate embodiments of the images 2 from the camera 201 in the vehicle and are further referred to as captured images 2. When the vehicle rolls out from the production line or after a replacement of a damaged camera 201, the method of aligning the camera 201 in the vehicle is illustrated in detail below. The camera 201 may initially be placed inside the slot defined in the vehicle. The camera 201 may be operatively coupled to a control unit 202. As illustrated in the step 101, the camera 201 may capture an image and the captured image 2 may be received by the receiving module 202a of the control unit 202. The body portion 2a of the vehicle in the captured image 2 may be defined by a third edge 2b and a fourth edge 2c. The third edge 2b and the fourth edge 2c of the body portion 2a in the captured image 2 may be identified by the processing module 202b of the control unit 202 by any known method in the art as illustrated at the step 101. Further, a second alignment 2h or a slope may be defined between the third edge 2b and the fourth edge 2c of the body portion 2a in the captured image 2. The slope or the second alignment 2h between the third edge 2b and the fourth edge 2c may be determined by the processing module 202b through Hough line detection method or any other method known in art, at step 103. The second alignment 2h between the third edge 2b and the fourth edge 2c is compared with the reference values i.e., the first alignment 1h between the first edge 1b and the second edge 1c by the comparison module 202c. The comparison module 202c of the control unit 202 may determine a deviation of the second alignment 2h of the body portion 2a in the captured image 2 from the first alignment 1h of the body portion 1a in the reference image 1 at step 105. With reference to Fig.5 as an example, it is clearly evident that the second alignment 2h is slightly inclined. It may therefore be concluded by the comparison module 202c that the camera 201 is incorrectly aligned since, the body portion 2a of the vehicle in the captured image 2 seems to be slanted at a particular angle. The deviation of the second alignment 2h may be for example found to be two degrees. Further, the comparison module 202c of the control unit 202 may check if the determined deviation of the second alignment 2h from the first alignment 1h lies within a pre-determined range of values. If the deviation of the second alignment 2h does not lie within the range of pre-determined values, the display module 203d of the control unit 202 may indicate by the display unit 203b of the indication unit 203 to the technician or the user that the camera 201 alignment is incorrect, and the technician may accordingly re-mount or re- align the camera 201 inside the slot of the vehicle. In an embodiment, the calibration algorithm may compensate for the deviation in the second alignment 2h by suitably programming the software to realize the correct alignment of the camera 201. The calibration algorithm may compensate for the deviation of the second alignment 2h when the deviation value of the second alignment 2h lies within the pre-determined range of values. The control unit 202 may accordingly indicate that the camera 201 is aligned correctly and any small deviation in the second alignment 2h may suitably be compensated by the calibration algorithm.

In an embodiment, the camera 201 mounted in the vehicle is considered to lie in the ideal or perfectly aligned condition when the angular deviation between the captured image 2 from the camera 201 and the reference image 1 is not more than 5 degrees of angular deviation. Ideally, the camera 201 may be considered to lie in the perfectly aligned condition when the comparison module 202c of the control unit 202 determines that the angular deviation between the captured image 2 from the camera 201 and the reference image 1 is less than 0.1 degree in angular deviation. However, according to various embodiments of the disclosure, the angular deviation between the captured image 2 from the camera 201 and the reference image 1 is acceptable when the angular deviation is not more than 5 degrees. The calibration algorithm may compensate for the deviation when the angular deviation between the captured image 2 from the camera 201 and the reference image 1 is not more than 5 degrees in angular deviation.

The processing module 202b of the control unit 202 may also calculate the number of pixels in the body portion 2a of the vehicle from the captured image 2 at step 102. Further, the comparison module 202c of the control unit 202 compares the number of pixels in the body portion 2a of the captured image 2 with number of pixels in the body portion 1a of the reference image 1 at step 104. Any deviation in number of pixels in the body portion 2a of the captured image 2 is indicative of an incorrect alignment of the camera 201. Further, the total number of estimated pixels may be used to determine the overall volume occupied by the body portion 2a of the vehicle in the captured image 2. The total volume of the body portion 2a of the vehicle in the captured image 2 may be for example found to be around 31% in Fig.5. Whereas the ideal volume occupied by the body portion 1a of the vehicle in the reference image 1 is around 29%. Therefore, a deviation of around 2% may be estimated. The comparison module 202c of the control unit 202 may compare the estimated deviation in the captured image 2 with a pre-determined range of values. If the volume occupied by the body portion 2a of the vehicle in the captured image 2 exceeds beyond the denominations of the pre-determined range of values, the control unit 202 may conclude that the camera 201 is aligned incorrectly and the same may be indicated to the technician or the user through the display unit 203b of the indication unit 203. The technician may accordingly re- align the camera 201 in the slot of the vehicle. Further, if the determined volume of the body portion 2a was found to be within the range of the pre-determined values, the control unit 202 may indicate that the camera 201 is aligned accurately.

Any minor deviations, in an embodiment an increase or decrease in volume of the body portion 2a by about 2% and may be suitably compensated by the calibration algorithm.

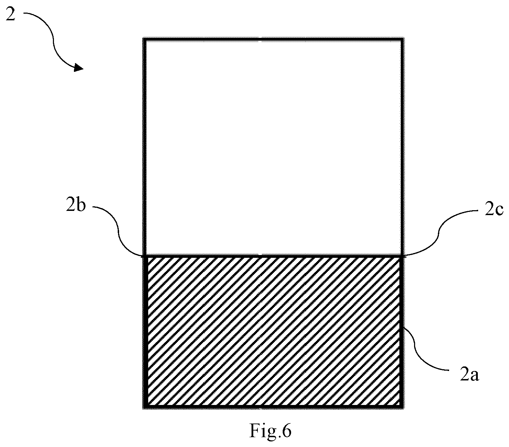

With reference to Fig.6, another embodiment of the captured image 2 is depicted. The above-mentioned steps disclose the aspects to determine the second alignment 2h and the volume occupied by the body portion 2a of the vehicle in the captured image 2 may be re-iterated. The second alignment 2h between the third edge 2b and fourth edge 2c may be found to be around 0 degrees and the volume occupied by the body portion 2a of the vehicle in the captured image 2 was found to be around 38%. Therefore, no deviation may be found in the second alignment 2h when compared with reference values, whereas a deviation of around 9% in volume may be estimated. The volume of the body portion 2a of the vehicle occupied by the captured image 2 was found to be in excess of 9%. The comparison module 202c of the control unit 202 may accordingly cross-check if the estimated deviation lies within the pre-determined range of values and if this estimated deviation can be compensated by the calibration algorithm. The control unit 202 may indicate that the camera 201 is aligned incorrectly if the estimated deviation is beyond the pre-determined range of values. The technician may accordingly re-align the camera 201. The technician may slightly move the camera 201 along its optical axis to re-align the camera 201 such that the body portion 2a of the vehicle lies within the pre-determined range of ideal values.

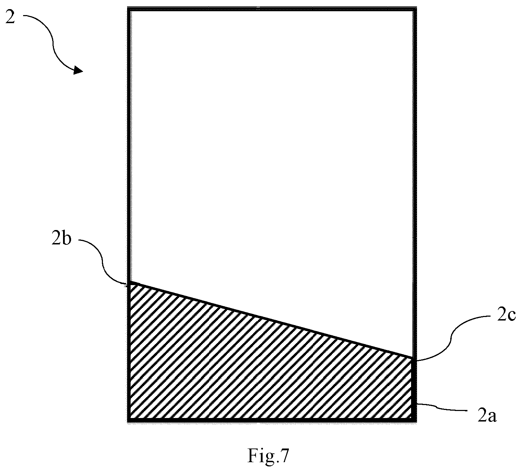

With reference to Fig.7, another exemplary embodiment of the captured image 2 is depicted. The second alignment 2h between the third edge 2b and fourth edge 2c may be found to be for example around 9 degrees and the volume occupied by the body portion 2a of the vehicle in the captured image 2 was found to be around 29%. Though the volume occupied by the body portion 2a of the vehicle remains close to the reference volume of 29%, the control unit 202 may still indicate that the camera 201 is aligned incorrectly due to the large deviation in the second alignment 2h between the third edge 2b and fourth edge 2c. Thus, the control unit 202 may indicate that the camera 201 is aligned incorrectly, if large deviations are estimated by the comparison module 202c in any one of the parameters i.e., second alignment 2h between the third edge 2b and fourth edge 2c and the volume occupied by the body portion 2a of the vehicle in the captured image 2. Based on the results from the comparison module 202c of the control unit 202, the technician, in the above case may re- align the camera 201 by rotating the camera 201 along its optical axis and by also moving the camera 201 along its vertical axis if required.

Thus, the user or the technician may align the camera 201 mounted in the slot defined in the vehicle.

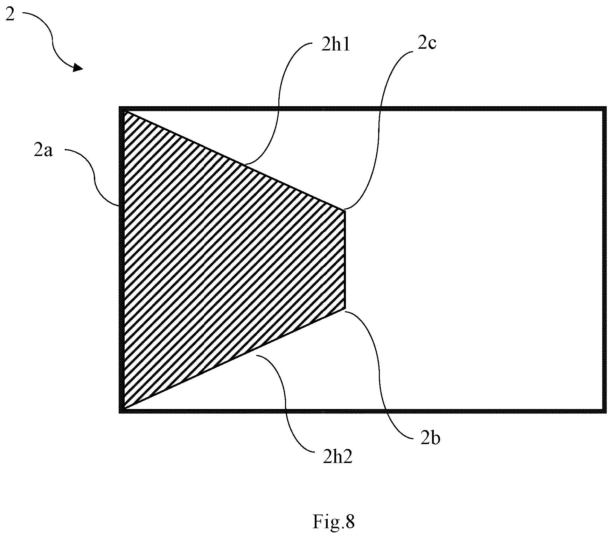

The above-described embodiments of aligning the camera 201 mounted in the front end and the rear end of the vehicle are only exemplary in nature. It is therefore obvious to the person skilled in the art that the above-described method of aligning the camera 201 at the front end and the rear end of the vehicle may also be applicable to the camera 201 mounted at the right-side rear-view mirror and the left-side rear-view mirror. Further, the above method may also be applicable to align cameras 201 mounted at various other locations of the vehicle. Fig.8 illustrates another embodiment of the captured image 2 from the camera 201 aligned on the left side mirror or the right-side rear-view mirror. As seen from Fig.8, the captured image 2 includes the body portion 2a of the vehicle. The body portion 2a of the vehicle in the captured image 2 from the camera 201 aligned to the left or the right-side rear-view mirror usually depicts the vehicle doors converging into the chassis. This is seen as a partial conical shape in the captured image 2. The body portion 2a in the captured image may extend from the bottom left and top left corners of the captured image 2 and may converge over the length of the captured image 2 as seen in Fig.8. The third edge 2b and the fourth edge 2c of the body portion 2a may initially be determined in the above-mentioned manner. Further, a third alignment 2h1 extending between the top left corner and the fourth edge 2c may be estimated. A fourth alignment 2h2 between bottom left corner and the third edge 2b may also be estimated in the above-mentioned manner. The third alignment 2h1 and the second alignment 2h may be compared with the reference values and the corresponding deviation may be estimated by the comparison module 202c of the control unit 202. Any deviation beyond a pre-determined set of values is indicative of incorrect alignment and the same may be indicated by the control unit 202. Further, the total number of pixels in the body portion 2a of the vehicle in the captured image 2 is also calculated using the above-mentioned methods. The corresponding volume occupied by the body portion 2a of the vehicle in the captured image 2 may be subsequently estimated. The estimated volume may then be compared with reference values by the comparison module 202c to determine the deviation. The control unit 202 may indicate an incorrect alignment when the estimated volume occupied by the body portion 2a of the vehicle in the captured image 2 does not lie within the pre-determined range of values. The calibration algorithm may correct minor deviations, however, deviations beyond a certain range are indicated as incorrect alignment of the camera 201. The above-described alignment of the camera 201 at the left and right view mirrors is also an exemplary embodiment and the same must not be construed as a limitation. For instance, the above method of aligning the camera 201 may also be applicable to dashboard cameras 201, trailer cameras 201 etc. and the same is obvious to the person skilled in the art. The cameras 201 may be calibrated by running the calibration algorithm after the alignment in the above-described manner.

In an embodiment, the above-mentioned process of conducting the pre-condition check for aligning the camera 201 in the slot of the vehicle before running the calibration algorithm saves time and operational costs.

In an embodiment, obtaining approximate deviation parameters prior to calibration, may eventually be used as additional input to the calibration algorithm.

In an embodiment, the above-mentioned process of aligning the camera 201 at the left and right-side rear-view mirrors of the vehicle may be used to identify the position of mirrors closed or open, which could be used to trigger appropriate action from the user.

In an embodiment, the above-mentioned process may be used to correct camera 201 placement postproduction during maintenance or camera 201 replacement.

### Equivalents

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, are generally intended as "open" terms e.g., the term "including" should be interpreted as "including but not limited to," the term "having" should be interpreted as "having at least," the term "includes" should be interpreted as "includes but is not limited to," etc.. It will be further understood by those within the art that if a specific number of an introduced claim recitation is intended, such an intent will be explicitly recited in the claim, and in the absence of such recitation, no such intent is present. For example, as an aid to understanding the description may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" e.g., "a" and/or "an" should typically be interpreted to mean "at least one" or "one or more"; the same holds true for the use of definite articles used to introduce claim recitations. In addition, even if a specific number of an introduced claim recitation is explicitly recited, those skilled in the art will recognize that such recitation should typically be interpreted to mean at least the recited number e.g., the bare recitation of "two recitations," without other modifiers, typically means at least two recitations, or two or more recitations. Furthermore, in those instances where a convention analogous to "at least one of A, B, and C, etc." is used, in general such a construction is intended in the sense of one having skill in the art would understand the convention e.g., "a system having at least one of A, B, and C" would include but not be limited to systems that have A alone, B alone, C alone, A and B together, A and C together, B and C together, and/or A, B, and C together, etc.. In those instances where a convention analogous to "at least one of A, B, or C, etc." is used, in general such a construction is intended in the sense of one having skill in the art would understand the convention e.g., "a system having at least one of A, B, or C" would include but not be limited to systems that have A alone, B alone, C alone, A and B together, A and C together, B and C together, and/or A, B, and C together, etc.. It will be further understood by those within the art that virtually any disjunctive word and/or phrase presenting two or more alternative terms, whether in the description, or drawings, should be understood to contemplate the possibilities of including one of the terms, either of the terms, or both terms. For example, the phrase "A or B" will be understood to include the possibilities of "A" or "B" or "A and B."

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated in the description.

### Referral Numerals:

| **Referral numeral** | **Description** |
|---|---|
| 201 | Camera |
| 202 | Control unit |
| 203 | Indication unit |
| 1 | Reference image |
| 1a | Visible potion of the vehicle in the reference image |
| 1b | First edge |
| 1c | Second edge |
| 2 | Captured image |
| 2a | Visible potion of the vehicle in the captured image |
| 2b | Third edge |
| 2c | Fourth edge |
| 204 | Memory unit |

## Claims

1. A method for determining deviation in alignment of a camera (201) in a vehicle, the method comprising:
receiving, by a control unit (202), images captured from the camera (201) positioned in a slot defined in the vehicle;
comparing, by the control unit (202), images received from the camera (201) with one or more reference images corresponding to the camera (201);
determining, by the control unit (202), deviation in a body portion (2a) of vehicle visible in the images (2) received from the camera (201), from the body portion (1a) of the vehicle visible in one or more reference images (1), based on the comparison;
indicating, by the control unit (202), deviation in the alignment of the camera (201) based on the determination,
**characterized in that**
the control unit (202) is configured to determine the deviation by:
determining, by the control unit (202), number of pixels of the visible body portion (2a) in the images (2) received from the camera; and
comparing, by the control unit (202), the determined number of pixels with number of pixels in the body portion (1a) of the one or more reference images (1).

2. The method as claimed in claim 1 wherein the control unit (202) is configured to determine the deviation by:
determining, by a control unit (202), edges (2b and 2c) of the body portion (2a) of vehicle visible in the images (2) received from the camera (201),
estimating, by a control unit (202), the alignment (2h) from the determined edges (2b and 2c); and
comparing, by a control unit (202), the estimated alignment (2h) with the alignment (1h) of the body portion (1a) in the one or more reference images (1).

3. The method as claimed in claim 1, wherein the deviation in the body portion (2a) of vehicle visible in the images (2) received from the camera (201), from the body portion (1a) of the vehicle visible in one or more reference images (1), is indicated by at least one of the number of pixels in the body portion (2a) of vehicle visible in the images (2) received from the camera (201) or the volume occupied by the body portion (2a) of vehicle visible in the images (2) received from the camera (201).

4. The method as claimed in claim 1, wherein the deviation is indicated by angle of the alignment 1h of the body portion (2a) of vehicle visible in the images (2) received from the camera (201).

5. The method as claimed in claim 1, wherein the one or more reference images (1) are generated based on computer aided modelling of the vehicle.

6. The method as claimed in claim 1, wherein the camera (201) is mounted in a manner such that some portion of vehicle is visible.

7. A system for determining deviation in alignment of a camera (201) in a vehicle, the system comprising:
a control unit (202) configured to: receive images captured from the camera (201) positioned in a slot defined in the vehicle;
compare images received from the camera (201) with one or more reference images (1) corresponding to the camera (201), stored in a memory unit (204) associated with the control unit (202);
determine deviation in a body portion (2a) of vehicle visible in the images (2) received from the camera (201) from the body portion (1a) of the vehicle visible in one or more reference images (1), based on the comparison;
indicate deviation in the alignment of the camera (201) based on the determination,
**characterized in that**
the control unit (202) is configured to determine the deviation by:
determining, by the control unit (202), number of pixels of the visible body portion (2a) in the images (2) received from the camera; and
comparing, by the control unit (202), the determined number of pixels with number of pixels in the body portion (1a) of the one or more reference images (1).

8. The system as claimed in claim 7 comprises, an indication unit (203) associated with the control unit (202).

9. The system as claimed in claim 8, wherein the indication unit (203) is at least one audio indicator, visual indicator, and audio-visual indicator.

10. The system as claimed in claim 7, wherein the control unit (202) is configured to indicate deviation with reference to angle of alignment 1h of the body portion (2a) of vehicle visible in the images 2 received from the camera (201) through the indication unit (203).

11. The system as claimed in claim 7, wherein the control unit (202) is configured to generate a recommendation indicative of correction of the deviation, based on the determined level of deviation.

12. The system as claimed in in claim 11, wherein the recommendation indicative of correction of the deviation is at least one of correction in physical alignment of the camera (201) and a calibration of control logic in imaging through the camera (201).

13. The system as claimed in claim 7, wherein the one or more reference images (1) stored in the memory unit (204) are generated based on computer aided modelling of the vehicle.

## Patentansprüche

1. Verfahren zum Bestimmen der Abweichung der Ausrichtung einer Kamera (201) in einem Fahrzeug, wobei das Verfahren Folgendes umfasst:
Empfangen von Bildern, die von der Kamera (201), die in einem in dem Fahrzeug definierten Schlitz positioniert ist, aufgenommen werden, durch eine Steuereinheit (202);
Vergleichen der von der Kamera (201) empfangenen Bilder mit einem oder mehreren Referenzbildern, die der Kamera (201) entsprechen, durch die Steuereinheit (202);
Bestimmen der Abweichung eines in den von der Kamera (201) empfangenen Bildern (2) sichtbaren Karosserieabschnitts (2a) des Fahrzeugs gegenüber dem in einem oder mehreren Referenzbildern (1) sichtbaren Karosserieabschnitt (1a) des Fahrzeugs durch die Steuereinheit (202) auf Grundlage des Vergleichs;
Angeben der Abweichung der Ausrichtung der Kamera (201) durch die Steuereinheit (202) auf Grundlage der Bestimmung,
**dadurch gekennzeichnet, dass**
die Steuereinheit (202) dazu konfiguriert ist, die Abweichung durch Folgendes zu bestimmen:
Bestimmen einer Anzahl von Pixeln des sichtbaren Karosserieabschnitts (2a) in den von der Kamera empfangenen Bildern (2) durch die Steuereinheit (202); und
Vergleichen der bestimmten Anzahl von Pixeln mit einer Anzahl von Pixeln in dem Karosserieabschnitt (1a) des einen oder der mehreren Referenzbilder (1) durch die Steuereinheit (202).

2. Verfahren nach Anspruch 1, wobei die Steuereinheit (202) dazu konfiguriert ist, die Abweichung durch Folgendes zu bestimmen:
Bestimmen von Kanten (2b und 2c) des in den von der Kamera (201) empfangenen Bildern (2) sichtbaren Karosserieabschnitts (2a) des Fahrzeugs durch eine Steuereinheit (202),
Schätzen der Ausrichtung (2h) anhand der bestimmten Kanten (2b und 2c) durch eine Steuereinheit (202); und
Vergleichen der geschätzten Ausrichtung (2h) mit der Ausrichtung (1h) des Karosserieabschnitts (1a) in dem einen oder den mehreren Referenzbildern (1) durch eine Steuereinheit (202).

3. Verfahren nach Anspruch 1, wobei die Abweichung des in den von der Kamera (201) empfangenen Bildern (2) sichtbaren Karosserieabschnitts (2a) des Fahrzeugs von dem in einem oder mehreren Referenzbildern (1) sichtbaren Karosserieabschnitt (1a) des Fahrzeugs durch mindestens eines von der Anzahl von Pixeln in dem in den von der Kamera (201) empfangenen Bildern (2) sichtbaren Karosserieabschnitt (2a) des Fahrzeugs oder dem Volumen, das durch den in den von der Kamera (201) empfangenen Bildern (2) sichtbaren Karosserieabschnitt (2a) des Fahrzeugs eingenommen wird.

4. Verfahren nach Anspruch 1, wobei die Abweichung durch einen Winkel der Ausrichtung 1h des in den von der Kamera (201) empfangenen Bildern (2) sichtbaren Karosserieabschnitts (2a) des Fahrzeugs angegeben wird.

5. Verfahren nach Anspruch 1, wobei das eine oder die mehreren Referenzbilder (1) auf Grundlage einer computergestützten Modellierung des Fahrzeugs generiert werden.

6. Verfahren nach Anspruch 1, wobei die Kamera (201) derart angebracht ist, dass ein gewisser Abschnitt des Fahrzeugs sichtbar ist.

7. System zum Bestimmen der Abweichung der Ausrichtung einer Kamera (201) in einem Fahrzeug, wobei das System Folgendes umfasst:
eine Steuereinheit (202), die zu Folgendem konfiguriert ist: Empfangen von Bildern, die von der Kamera (201), die in einem in dem Fahrzeug definierten Schlitz positioniert ist, aufgenommen werden;
Vergleichen der von der Kamera (201) empfangenen Bilder mit einem oder
mehreren Referenzbildern (1), die der Kamera (201) entsprechen, die in einer der Steuereinheit (202) zugeordneten Speichereinheit (204) gespeichert sind;
Bestimmen der Abweichung eines in den von der Kamera (201) empfangenen Bildern (2) sichtbaren Karosserieabschnitts (2a) des Fahrzeugs gegenüber dem in einem oder mehreren Referenzbildern (1) sichtbaren Karosserieabschnitt (1a) des Fahrzeugs auf Grundlage des Vergleichs;
Angeben der Abweichung der Ausrichtung der Kamera (201) auf Grundlage der Bestimmung,
**dadurch gekennzeichnet, dass**
die Steuereinheit (202) dazu konfiguriert ist, die Abweichung durch Folgendes zu bestimmen:
Bestimmen einer Anzahl von Pixeln des sichtbaren Karosserieabschnitts (2a) in den von der Kamera empfangenen Bildern (2) durch die Steuereinheit (202); und
Vergleichen der bestimmten Anzahl von Pixeln mit einer Anzahl von Pixeln in dem Karosserieabschnitt (1a) des einen oder der mehreren Referenzbilder (1) durch die Steuereinheit (202).

8. System nach Anspruch 7 umfasst eine Angabeeinheit (203), die der Steuereinheit (202) zugeordnet ist.

9. System nach Anspruch 8, wobei die Angabeeinheit (203) mindestens ein akustischer Indikator, ein visueller Indikator und ein audiovisueller Indikator ist.

10. System nach Anspruch 7, wobei die Steuereinheit (202) dazu konfiguriert ist, die Abweichung mit Bezug auf einen Winkel der Ausrichtung 1h des in den von der Kamera (201) empfangenen Bildern 2 sichtbaren Karosserieabschnitts (2a) des Fahrzeugs durch die Angabeeinheit (203) anzugeben.

11. System nach Anspruch 7, wobei die Steuereinheit (202) dazu konfiguriert ist, auf Grundlage des bestimmten Abweichungsgrades eine Empfehlung, die eine Korrektur der Abweichung angibt, zu generieren.

12. System nach Anspruch 11, wobei die Empfehlung, die die Korrektur der Abweichung angibt, mindestens eine von einer Korrektur der physischen Ausrichtung der Kamera (201) und einer Kalibrierung von Steuerlogik bei der Bildgebung durch die Kamera (201) ist.

13. System nach Anspruch 7, wobei das eine oder die mehreren Referenzbilder (1), die in der Speichereinheit (204) gespeichert sind, auf Grundlage einer computergestützten Modellierung des Fahrzeugs generiert sind.

## Revendications

1. Procédé de détermination de l'écart dans l'alignement d'une caméra (201) dans un véhicule, le procédé comprenant :
la réception, par une unité de commande (202), des images capturées par la caméra (201) positionnée dans un emplacement défini dans le véhicule ;
la comparaison, par l'unité de commande (202), des images reçues de la caméra (201) avec une ou plusieurs images de référence correspondant à la caméra (201) ;
la détermination, par l'unité de commande (202), de l'écart dans une partie de carrosserie (2a) du véhicule visible dans les images (2) reçues de la caméra (201), par rapport à la partie de carrosserie (1a) du véhicule visible dans une ou plusieurs images de référence (1), sur la base de la comparaison ;
l'indication, par l'unité de commande (202), d'un écart dans l'alignement de la caméra (201) sur la base de la détermination,
**caractérisé en ce que**
l'unité de commande (202) est configurée pour déterminer l'écart par :
la détermination, par l'unité de commande (202), du nombre de pixels de la partie visible de la carrosserie (2a) dans les images (2) reçues de la caméra ; et
la comparaison, par l'unité de commande (202), du nombre déterminé de pixels avec le nombre de pixels dans la partie de carrosserie (1a) de l'une ou plusieurs images de référence (1).

2. Procédé selon la revendication 1 dans lequel l'unité de commande (202) est configurée pour déterminer l'écart par :
la détermination, par une unité de commande (202), des bords (2b et 2c) de la partie de carrosserie (2a) du véhicule visible dans les images (2) reçues de la caméra (201),
l'estimation, par une unité de commande (202), de l'alignement (2h) à partir des bords déterminés (2b et 2c) ; et
la comparaison, par une unité de commande (202), de l'alignement estimé (2h) avec l'alignement (1h) de la partie de carrosserie (1a) dans une ou plusieurs images de référence (1).

3. Procédé selon la revendication 1, dans lequel l'écart de la partie de carrosserie (2a) du véhicule visible dans les images (2) reçues de la caméra (201), par rapport à la partie de carrosserie (1a) du véhicule visible dans une ou plusieurs images de référence (1), est indiqué par au moins l'un des éléments suivants : le nombre de pixels dans la partie de carrosserie (2a) du véhicule visible dans les images (2) reçues de la caméra (201) ou le volume occupé par la partie de carrosserie (2a) du véhicule visible dans les images (2) reçues de la caméra (201).

4. Procédé selon la revendication 1, dans lequel l'écart est indiqué par l'angle d'alignement 1h de la partie de carrosserie (2a) du véhicule visible dans les images (2) reçues de la caméra (201).

5. Procédé selon la revendication 1, dans lequel l'une ou plusieurs images de référence (1) sont générées sur la base d'une modélisation assistée par ordinateur du véhicule.

6. Procédé selon la revendication 1, dans lequel la caméra (201) est montée de manière à ce qu'une partie du véhicule soit visible.

7. Système de détermination de l'écart dans l'alignement d'une caméra (201) dans un véhicule, le système comprenant :
une unité de commande (202) configurée pour : recevoir des images capturées par la caméra (201) positionnée dans un emplacement défini dans le véhicule ;
comparer des images reçues de la caméra (201) avec une ou plusieurs images de référence (1) correspondant à la caméra (201), stockées dans une unité de mémoire (204) associée à l'unité de commande (202) ;
déterminer l'écart dans une partie de carrosserie (2a) du véhicule visible dans les images (2) reçues de la caméra (201), par rapport à la partie de carrosserie (1a) du véhicule visible dans une ou plusieurs images de référence (1), sur la base de la comparaison ;
indiquer l'écart dans l'alignement de la caméra (201) sur la base de la détermination,
**caractérisé en ce que**
l'unité de commande (202) est configurée pour déterminer l'écart par :
la détermination, par l'unité de commande (202), du nombre de pixels de la partie visible de la carrosserie (2a) dans les images (2) reçues de la caméra ; et
la comparaison, par l'unité de commande (202), du nombre déterminé de pixels avec le nombre de pixels dans la partie de carrosserie (1a) de l'une ou plusieurs images de référence (1).

8. Système selon la revendication 7 comprend une unité d'indication (203) associée à l'unité de commande (202).

9. Système selon la revendication 8, dans lequel l'unité d'indication (203) est au moins un indicateur audio, un indicateur visuel et un indicateur audiovisuel.

10. Système selon la revendication 7, dans lequel l'unité de commande (202) est configurée pour indiquer l'écart en référence à l'angle de l'alignement 1h de la partie de carrosserie (2a) du véhicule visible dans les images 2 reçues de la caméra (201) à travers l'unité d'indication (203).

11. Système selon la revendication 7, dans lequel l'unité de commande (202) est configurée pour générer une recommandation indiquant la correction de l'écart, sur la base du niveau d'écart déterminé.

12. Système selon la revendication 11, dans lequel la recommandation indiquant la correction de l'écart est une correction dans l'alignement physique de la caméra (201) et un étalonnage de la logique de commande dans l'imagerie par l'intermédiaire de la caméra (201).

13. Système selon la revendication 7, dans lequel une ou plusieurs images de référence (1) stockées dans l'unité de mémoire (204) sont générées sur la base d'une modélisation assistée par ordinateur du véhicule.
